# EUROPÄISCHE PATENTSCHRIFT

(11) **EP 1 245 806 B1**
(45) Veröffentlichungstag und Bekanntmachung des Hinweises auf die Patenterteilung: **03.08.2005**
(21) Anmeldenummer: 01108173.4
(22) Anmeldetag: 30.03.2001
(51) Int. Cl.: F02C 7/18, F01D 5/18

(54) **Gekühlte Gasturbinenschaufel**
Cooled gas turbine balde
Aube de turbine refroidie

(43) Veröffentlichungstag der Anmeldung: 02.10.2002
(73) Patentinhaber: SIEMENS AKTIENGESELLSCHAFT, 80333 München (DE)
(72) Erfinder: Tiemann, Peter, 58452 Witten (DE)

(56) Entgegenhaltungen:
- EP-A- 0 933 517
- DE-A- 19 629 191
- US-A- 3 015 937
- US-A- 3 936 215
- US-A- 4 901 520
- US-A- 6 089 010

## Beschreibung

Die Erfindung bezieht sich auf eine Gasturbine mit einer Anzahl von jeweils zu Laufschaufelreihen zusammengefaßten, an einer Turbinenwelle angeordneten Laufschaufeln und mit einer Anzahl von jeweils zu Leitschaufelreihen zusammengefaßten, mit einem Turbinengehäuse verbundenen Leitschaufeln.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Brennkammer verbrannt, wobei von einem Luftverdichter verdichtete Luft zugeführt wird. Das in der Brennkammer durch die Verbrennung des Brennstoffs erzeugte, unter hohem Druck und unter hoher Temperatur stehende Arbeitsmedium wird dabei über eine der Brennkammer nachgeschaltete Turbineneinheit geführt, wo es sich arbeitsleistend entspannt.

Zur Erzeugung der Rotationsbewegung der Turbinenwelle sind dabei an dieser eine Anzahl von üblicherweise in Schaufelgruppen oder Schaufelreihen zusammengefaßten Laufschaufeln angeordnet, die über einen Impulsübertrag aus dem Arbeitsmedium die Turbinenwelle antreiben. Zur Führung des Arbeitsmediums in der Turbineneinheit sind zudem üblicherweise zwischen benachbarten Laufschaufelreihen mit dem Turbinengehäuse verbundene Leitschaufelreihen angeordnet.

Bei der Auslegung derartiger Gasturbinen ist zusätzlich zur erreichbaren Leistung üblicherweise ein besonders hoher Wirkungsgrad ein Auslegungsziel. Eine Erhöhung des Wirkungsgrades läßt sich dabei aus thermodynamischen Gründen grundsätzlich durch eine Erhöhung der Austrittstemperatur erreichen, mit dem das Arbeitsmedium aus der Brennkammer ab- und in die Turbineneinheit einströmt. Daher werden Temperaturen von etwa 1200 °C bis 1300 °C für derartige Gasturbinen angestrebt und auch erreicht.

Bei derartig hohen Temperaturen des Arbeitsmediums sind jedoch die diesem ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere von Lauf- und/oder Leitschaufeln der Turbineneinheit, vorgesehen. Die Turbinenschaufeln sind daher üblicherweise kühlbar ausgebildet, wobei insbesondere eine wirksame und zuverlässige Kühlung der in Strömungsrichtung des Arbeitsmediums gesehen ersten Schaufelreihen sichergestellt sein soll. Zur Kühlung weist die jeweilige Turbinenschaufel dabei üblicherweise einen in das Schaufelblatt oder das Schaufelprofil integrierten Kühlmittelkanal auf, von dem aus ein Kühlmittel gezielt insbesondere den thermisch belasteten Zonen der Turbinenschaufel zuleitbar ist.

Als Kühlmittel kommt dabei üblicherweise Kühlluft zum Einsatz. Diese wird der jeweiligen Turbinenschaufel üblicherweise in der Art einer offenen Kühlung über einen integrierten Kühlmittelkanal zugeführt. Nach dem Austritt aus der Turbinenschaufel wird die Kühlluft dabei mit dem in der Turbineneinheit geführten Arbeitsmedium vermischt, solche Kühlluftführung ist im Dokument US-A-4 901 520 dargestellt. Die Auslegungsleistung einer derartig gekühlten Gasturbine ist jedoch begrenzt, insbesondere da im Hinblick auf die begrenzte mechanische Belastbarkeit einzelner Komponenten der Gasturbine eine weitere Leistungssteigerung üblicherweise nur durch eine vermehrte Brennstoffzufuhr erreichbar ist. Diese bedingt ihrerseits einen vergleichsweise erhöhten Bedarf an Kühlmittel zur Kühlung der Turbinenschaufeln, der seinerseits Verluste im verfügbaren Verdichtermassenstrom bedeutet. Diese Verluste können wiederum nur in begrenztem Ausmaß hingenommen werden.

Der Erfindung liegt daher die Aufgabe zugrunde, eine Gasturbine der oben genannten Art anzugeben, die bei zuverlässiger Kühlung der Turbinenschaufeln für eine besonders hohe Auslegungsleistung geeignet ist.

Diese Aufgabe wird durch die Merkmale des unabhängigen Anspruchs 1 gelöst. Die in Strömungsrichtung des Arbeitsmediums gesehen erste Leitschaufelreihe bildenden Leitschaufeln jeweils einen integrierten Kühlmittelkanal aufweisen, dessen Einlaß am freien Ende der jeweiligen Leitschaufel angeordnet ist, und der sich innerhalb des jeweiligen Schaufelkörpers in einen ersten und in einen zweiten Teilkanal verzweigt.

Die Erfindung geht dabei von der Überlegung aus, daß bei hohem Wirkungsgrad der Gasturbine eine besonders hohe Auslegungsleistung erreichbar ist, indem Verluste im verfügbaren Verdichtermassenstrom besonders gering gehalten sind. Um diese Verluste besonders gering zu halten, sollte daher die Gasturbine für einen besonders geringen Bedarf an Kühlmittel, insbesondere an Kühlluft, ausgelegt sein. Dies ist erreichbar, indem unter Abkehr vom Konzept einer offenen Kühlung eine geschlossene Kühlung vorgesehen ist, bei der das Kühlmittel nach Durchströmen der zu kühlenden Turbinenschaufeln dem Verbrennungsprozeß zugeführt wird. Allerdings tritt bei einer derartig geschlossenen Kühlung möglicherweise ein Druckverlust im Kühlmittelstrang auf, der eine Einspeisung des von den Turbinenschaufeln abströmenden Kühlmittels in die Brennkammer der Gasturbine grundsätzlich ausschließt.

Um einerseits diesen Druckverlust besonders gering zu halten und somit eine im Prinzip geschlossene Kühlung der Turbinenschaufeln überhaupt erst zu ermöglichen, ist eine "gegenläufige Durchströmung" der Leitschaufel vorgesehen, wobei das Kühlmittel am freien Ende der Leitschaufel ein- und an ihrer Plattform wieder austritt. Um andererseits eine zuverlässige Kühlung jedes möglicherweise einer thermischen Belastung ausgesetzten Bereichs der jeweiligen Turbinenschaufeln sicherzustellen, ist die Aufteilung des Kühlmittelstroms in den die erste Leitschaufelreihe bildenden Leitschaufeln vorgesehen. Dadurch können einerseits die Strömungswege besonders kurz gehalten werden, wobei andererseits verschiedene, für die Kühlung besonders relevante Zone innerhalb der jeweiligen Turbinenschaufel parallel bespeist werden.

Dabei ist vorzugsweise eine gezielte Beaufschlagung des Schaufelprofils der jeweiligen Leitschaufel mit einer ausreichenden Menge an Kühlmittel vorgesehen. Gerade das Schaufelprofil der die erste Leitschaufelreihe bildenden Leitschaufeln ist nämlich eine besonders hohen thermischen Belastung ausgesetzt, so daß gerade hier der Bedarf an einer ausreichenden Kühlung besonders groß ist. Dieser Bereich kann somit gezielt mit Kühlmittel beaufschlagt werden, wobei auch die Einhaltung besonders kurzer Strömungswege für den entsprechenden Kühlmittelstrom möglich ist. Auch bei der Beaufschlagung des Schaufelprofils mit einer vergleichsweise großen Menge an Kühlmittel kann somit der Druckverlust begrenzt gehalten sein, so daß eine Rückführung des aus dem Schaufelprofil abströmenden Kühlmittels in den Verbrennungsprozeß der Gasturbine möglich ist.

In weiterer vorteilhafter Ausgestaltung ist das im zweiten Teilkanal geführte Kühlmittel für die Kühlung der in Strömungsrichtung des Arbeitsmediums gesehen zweiten Leitschaufelreihe vorgesehen. Dazu ist der zweite Teilkanal jeweils vorteilhafterweise ausgangsseitig mit einem Kühlkanalsystem eines mit dem Turbinengehäuse verbundenen Führungsrings verbunden, an das seinerseits ausgangsseitig für jede der die in Strömungsrichtung des Arbeitsmediums gesehen zweite Leitschaufelreihe bildende Leitschaufel jeweils ein in diese integrierter Kühlmittelkanal angeschlossen ist. Für das im zweiten Teilkanal geführte Kühlmittel ergibt sich somit ein Strömungsweg der zunächst weitgehend verlustfrei durch die jeweilige die erste Leitschaufelreihe bildende Leitschaufel von innen nach außen geführt ist, von dort durch den Führungsring verläuft und anschließend in der Art eines Mäanders die jeweilige zur zweiten Leitschaufelreihe gehörige Leitschaufel durchläuft. Somit liegt auch eine im wesentlichen geschlossene Kühlung der Leitschaufeln der zweiten Leitschaufelreihe vor, wobei das aus diesen abströmende Kühlmittel ebenfalls der Brennkammer der Gasturbine zugeführt ist.

Gerade durch diesen zweiten Teilkanal ist eine gezielte Bespeisung der die zweite Leitschaufelreihe bildenden Leitschaufeln mit einer bedarfsgerechten Menge an Kühlmittel ermöglicht. Insbesondere aufgrund der im Vergleich zur ersten Leitschaufelreihe geringeren Temperatur, der die zweite Leitschaufelreihe ausgesetzt ist, kann die zur Kühlung der die zweite Leitschaufelreihe bildenden Leitschaufeln vorgesehene Menge an Kühlmittel vergleichsweise gering bemessen sein, so daß trotz des vergleichsweise langen Strömungswegs des Kühlmittels im zweiten Teilkanal der Druckverlust nur begrenzt ist.

In besonders vorteilhafter Ausgestaltung ist dem in die die erste Leitschaufelreihe bildenden Leitschaufeln integrierten Kühlmittelkanal kühlmittelseitig ein Kühlmittelverdichter vorgeschaltet. Dieser ist zweckmäßigerweise eingangsseitig mit einem als Kühlmittel für die Leitschaufeln vorgesehenen Teil des Verdichtermassenstroms der Gasturbine beaufschlagt. Der Verdichter erhöht dabei den Druck des fraglichen Teils des Verdichtermassenstroms in einem zum Ausgleich des Druckverlusts infolge der Durchströmung der jeweiligen Leitschaufeln ausreichenden Maße. In besonders vorteilhafter Weiterbildung ist der Kühlmittelverdichter dabei derart bemessen, daß er bei auslegungsgemäßen Betriebsbedingungen eine Drukkerhöhung im für die jeweiligen Leitschaufeln vorgesehen Kühlmittel derart erzeugt, daß das Kühlmittel nach Durchströmen der Leitschaufeln bei einer Rückführung in einen die Brennkammer der Gasturbine umgebenden Raumbereich annähernd den dort herrschenden Druck aufweist. Durch eine derartige Anordnung ist gewährleistet, daß das für die Leitschaufeln vorgesehene Kühlmittel ein ausreichend hohes Druckniveau aufweist, so daß zumindest ein Großteil des benötigten Kühlmittels in den Verbrennungsprozeß der Gasturbine rückführbar ist. Gerade durch die Rückführung der benötigten Kühlluft in den Verbrennungsprozeß ist eine besonders hohe Leistungsausbeute und/oder ein besonders niedriger Grad an Emissionen erreichbar.

Die mit der Erfindung erzielten Vorteile bestehen insbesondere darin, daß durch die Verzweigung des Strömungswegs für die Kühlluft in den die erste Leitschaufelreihe bildenden Leitschaufeln eine gezielte Beaufschlagung der zu kühlenden Komponenten bei vergleichsweise geringem Druckverlust ermöglicht. Der somit nur begrenzt auftretende Druckverlust ist insbesondere durch den kühlmittelseitig vorgeschalteten Kühlmittelverdichter kompensierbar, so daß bei gleichbleibend hohem Wirkungsgrad eine leistungssteigernde und emissionsmindernde Rückgewinnung der Kühlluft für den Verbrennungsprozeß in der Art einer geschlossenen Kühlung der jeweiligen Leitschaufeln ermöglicht ist. Der Kühlluftstrom ist dabei in den die erste Leitschaufelreihe bildenden Leitschaufeln bedarfsgerecht aufgespalten, wobei der erste Teilstrom unter vertretbarem Druckverlust zur Kühlung des Leitschaufelprofils vorgesehen ist, und wobei der zweite Teilstrom diese Leitschaufel im wesentlichen verlustfrei durchströmt. Infolgedessen kann der zweite Teilstrom mit insgesamt vertretbarem Druckverlust noch zur Kühlung der die zweite Leitschaufelreihe bildenden Leitschaufeln herangezogen werden.

Ein Ausführungsbeispiel der Erfindung wird anhand einer Zeichnung näher erläutert. Darin zeigen:
- Figur 1: einen Halbschnitt durch eine Gasturbine, und
- Figur 2: einen Ausschnitt aus einem Längsschnitt der Gasturbine nach Figur 1 mit der Darstellung von Kühlkanälen.

Gleiche Teile sind in allen Figuren mit denselben Bezugszeichen versehen.

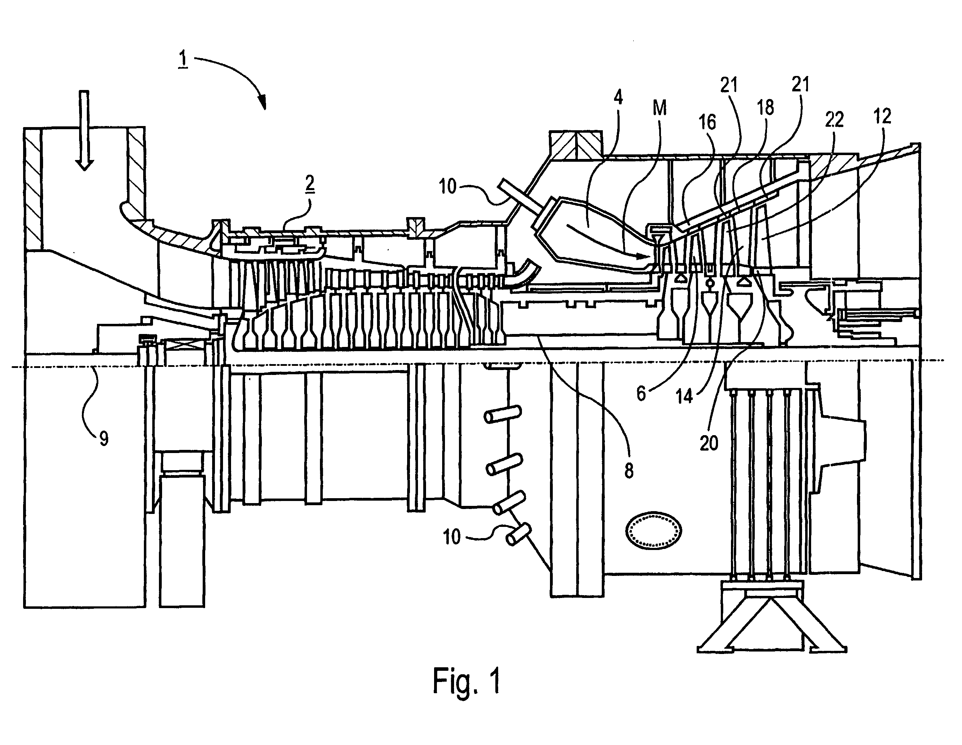

Die Gasturbine 1 gemäß Figur 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfaßt die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinanderfolgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zwischen den beabstandet voneinander angeordneten Plattformen 18 der Leitschaufeln 14 zweier benachbarter Leitschaufelreihen ist jeweils ein Führungsring 21 am Innengehäuse 16 der Turbine 6 angeordnet. Die äußere Oberfläche jedes Führungsrings 21 ist dabei ebenfalls dem heißen, die Turbine 6 durchströmenden Arbeitsmedium M ausgesetzt und in radialer Richtung vom äußeren Ende 22 der ihm gegenüber liegenden Laufschaufel 12 durch einen Spalt beabstandet. Die zwischen benachbarten Leitschaufelreihen angeordneten Führungsringe 21 dienen dabei insbesondere als Abdeckelemente, die die Innenwand 16 oder andere Gehäuse-Einbauteile vor einer thermischen Überbeanspruchung durch das die Turbine 6 durchströmende heiße Arbeitsmedium M schützt.

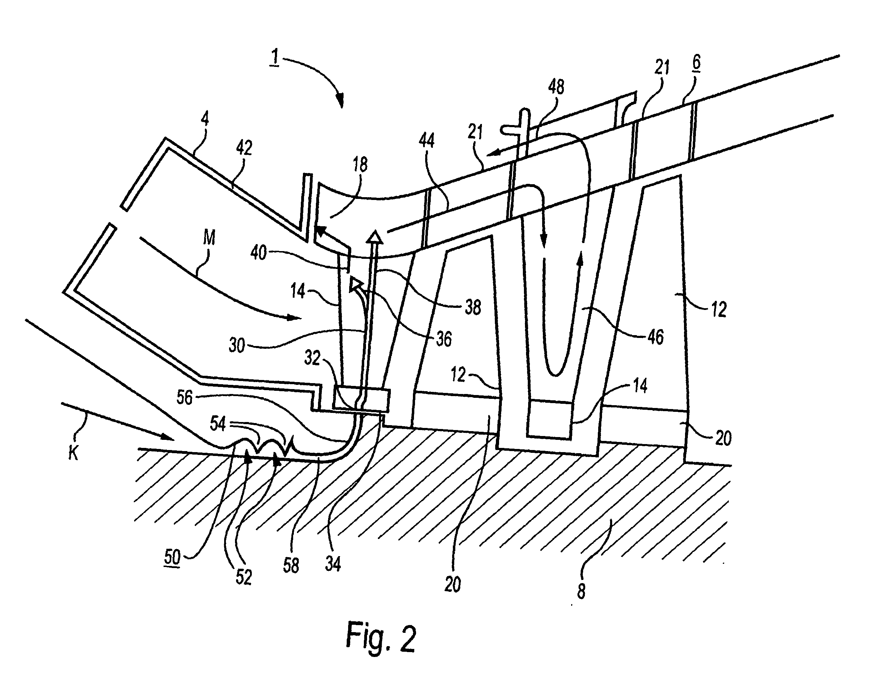

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1300 °C ausgelegt. Um dies zu ermöglichen, sind zumindest einige der Laufschaufeln 12 und der Leitschaufeln 14 durch Kühlluft als Kühlmedium kühlbar ausgelegt. Zur Verdeutlichung des Strömungsweges der Kühlluft ist der der Brennkammer 4 unmittelbar folgende Bereich der Gasturbine 1 in Figur 2 im Ausschnitt vergrößert dargestellt. Dabei ist erkennbar, daß das aus der Brennkammer 4 abströmende Arbeitsmedium M zunächst auf eine Anzahl von Leitschaufeln 14 trifft, die die sogenannte erste Leitschaufelreihe bilden und über ihre jeweilige Plattform 18 in die Brennkammer 4 eingehängt sind. In Strömungsrichtung des Arbeitsmediums M gesehen folgen sodann die die erste Laufschaufelreihe bildenden Laufschaufeln 12, die die zweite Laufschaufelreihe bildenden Leitschaufeln 14, sowie die die zweite Laufschaufelreihe bildenden Laufschaufeln 12.

Um bei besonders hohem Wirkungsgrad der Gasturbine 1 eine hohe Auslegungsleistung zu ermöglichen, ist die Gasturbine 1 für eine im wesentlichen geschlossene Kühlung der die erste und die zweite Leitschaufelreihe bildenden Leitschaufeln 14 ausgelegt, wobei eine Rückführung der "verbrauchten", aus den genannten Leitschaufeln 14 abströmenden Kühlluft in die Brennkammer 4 der Gasturbine 1 vorgesehen ist. Um den bei einer derartigen Kühlung auftretenden Druckverlust der Kühlluft für deren Rückspeisung in die Brennkammer 4 ausreichend gering zu halten, weisen die die in Strömungsrichtung des Arbeitsmediums M gesehen erste Leitschaufelreihe bildenden Leitschaufeln 14 jeweils einen durch den Pfeil 30 symbolisierten integrierten Kühlmittelkanal auf. Der Einlaß 32 des Kühlmittelkanals ist dabei am freien Ende 34 der jeweiligen Leitschaufel 14 angeordnet, so daß sich bei der Beaufschlagung des in die Leitschaufel 14 integrierten Kühlmittelkanals mit Kühlmittel K eine Durchströmung der jeweiligen Leitschaufel 14 von ihrem freien Ende 34 hin zu ihrem Schaufelfuß oder ihrer Plattform 18 ergibt.

Innerhalb des Schaufelkörpers der jeweiligen Leitschaufel 14 verzweigt sich der Kühlmittelkanal, wie durch die Aufspaltung des Pfeils 30 angedeutet, in einen durch einen ersten Teilstrompfeil 36 symbolisierten ersten Teilkanal und in einen durch einen zweiten Teilstrompfeil 38 symbolisierten zweiten Teilstromkanal. Die Teilstromkanäle sind dabei jeweils derart ausgestaltet, daß über sie eine gezielte Beaufschlagung jeweils besonders relevanter Stellen der Gasturbine 1 mit Kühlmittel K bei nur vergleichsweise geringem Druckverlust ermöglicht ist. Dabei ist der durch den ersten Teilstrompfeil 36 symbolisierte erste Teilkanal für eine Kühlung des Schaufelprofils der jeweiligen Leitschaufel 14 ausgestaltet. Dazu kann die Leitschaufel 14 beispielsweise hohle Wände aufweisen, in denen der entsprechende Teilstrom an Kühlmittel K geführt ist. Austrittsseitig ist der erste Teilkanal, wie durch den Strömungspfeil 40 symbolisiert ist, mit einem Kanalsystem verbunden, das seinerseits ausgangsseitig mit einem die Brennkammer 4 umgebenden Strömungsraum 42 kommuniziert. Der Strömungsraum 42 ist dabei mit dem aus dem Verdichter 2 der Gasturbine 1 abströmenden Verdichtermassenstrom beaufschlagt, so daß in der Art einer Rückführung bei der Einspeisung des durch den ersten Teilkanal geführten Teilstroms des Kühlmittel K in den Strömungsraum 42 eine Vermischung mit dem Verdichtermassenstrom eintritt. Im weiteren Verlauf erfolgt sodann eine Zuführung des im Strömungsraum 42 befindlichen Gasgemisches in den Verbrennungsprozeß der Gasturbine 1.

Der durch den zweiten Teilstrompfeil 38 symbolisierte zweite Teilkanal innerhalb des Schaufelkörpers der jeweiligen Leitschaufel 14 ist ausgangsseitig mit einem Kühlkanalsystem verbunden, das durch den in Strömungsrichtung des Arbeitsmediums M gesehen nachfolgenden Führungsring 21 geführt ist und ausgangsseitig mit einem in eine die in Strömungsrichtung des Arbeitsmediums M gesehen zweite Leitschaufelreihe bildende Leitschaufel 14 integrierten Kühlmittelkanal kommuniziert. Für das im zweiten Teilkanal geführte Kühlmittel K ergibt sich somit ein Strömungsweg, der zunächst entsprechend dem zweiten Teilstrompfeil 38 in der ursprünglichen Leitschaufel verläuft, von dort aus, wie durch den Strömungspfeil 44 angedeutet, dem Führungsring 21 durchdringt, und anschließend, wie durch den Strömungspfeil 46 angedeutet, mäanderförmig in einer der zweiten Leitschaufelreihe zugehörigen weiteren Leitschaufel 14 verläuft. Abströmseitig von dieser ist der jeweilige Teilstrom des Kühlmittels K, wie durch den Strömungspfeil 48 angedeutet, ebenfalls in den Strömungsraum 42 rückgeführt.

Durch eine derartige Strömungsführung des Kühlmittels K für die Leitschaufeln 14 kann eine besonders bedarfsgerecht ausgestaltete Beaufschlagung mit Kühlmittel K erfolgen. Insbesondere kann dabei die die in Strömungsrichtung des Arbeitsmediums M gesehen erste Leitschaufelreihe bildende Leitschaufel 14, die einer vergleichsweise hohen thermischen Belastung ausgesetzt ist, mit einer vergleichsweise großen Menge an Kühlmittel K beaufschlagt werden. Für den entsprechenden Teilstrom ist der Strömungsweg bis zur Rückführung in den Strömungsraum 42 besonders kurz gehalten, so daß auch bei der Verwendung einer vergleichsweise großen Menge an Kühlmittel K der Druckverlust nur begrenzt ist. Andererseits kann aber auch eine Beaufschlagung der die in Strömungsrichtung des Arbeitsmediums M gesehen zweite Leitschaufelreihe bildenden Leitschaufel 14 mit Kühlmittel K erfolgen. Trotz des dabei vorliegenden, vergleichsweise langen Strömungswegs ist auch hier der Druckverlust begrenzt, insbesondere da der entsprechende Teilstrom des Kühlmittel K nicht zu Kühlzwecken für die in Strömungsrichtung des Arbeitsmediums M gesehen erste Leitschaufelreihe herangezogen ist und somit die entsprechende Leitschaufel 14 im wesentlichen ohne Druckverlust durchströmen kann. Somit ist der Druckverlust für das Kühlmittel K insgesamt besonders gering gehalten, so daß überhaupt erst der in der Art einer geschlossenen Kühlung ausgestalteten Kühlung der Leitschaufeln 14 eine Rückführung des Kühlmittels K in den Strömungsraum 42 und somit in den Verbrennungsprozeß der Gasturbine 1 ermöglicht ist.

Um ein für eine derartige Rückführung des Kühlmittels K erforderliches Druckniveau besonders sicher einzuhalten, ist der die in Strömungsrichtung des Arbeitsmediums M gesehen erste Leitschaufelreihe bildenden Leitschaufel 14 kühlmittelseitig ein Kühlmittelverdichter 50 vorgeschaltet. Der Kühlmittelverdichter 50 ist dabei im Ausführungsbeispiel als Axialverdichter ausgebildet und umfaßt eine Anzahl von fest mit der Turbinenwelle 8 verbundenen Kompressorelementen 52 sowie eine Anzahl von fest mit dem Turbinengehäuse 6 verbundenen Kompressorelementen 54. Der Kühlmittelverdichter 50 ist eingangsseitig mit Kühlmittel K beaufschlagt und kommuniziert ausgangsseitig über einen von der Turbinenwelle 8 einen Gehäuseelement 56 begrenzten Kühlmittelkanal 58 mit dem Einlaß 32 für Kühlmittel K der Leitschaufeln 14. Zur Beaufschlagung mit Kühlmittel K ist der Verdichter 50 dabei eingangsseitig mit dem Verdichter 2 verbunden, so daß ein Teil des aus dem Verdichter 2 abströmenden Verdichtermassenstroms als Kühlmittel K für die Leitschaufeln 14 abgezweigt werden kann.

Der Kühlmittelverdichter 50 ist in seiner Auslegung an den vorgesehenen Betriebsfall einer Rückführung des Kühlmittels K für die Leitschaufeln 14 in den Verbrennungsprozeß der Gasturbine 1 angepaßt. Dazu ist der Kühlmittelverdichter 50 derart bemessen, daß er bei auslegungsgemäßen Betriebsbedingungen eine Druckerhöhung im Kühlmittel K derart erzeugt, daß das Kühlmittel K nach einem Durchströmen des ersten oder zweiten Teilkanals und der nachfolgenden Strömungswege und bei der Rückführung in den Strömungsraum 42 annähernd den dort herrschenden Druck aufweist.

## Patentansprüche

1. Gasturbine (1) mit einer Anzahl von jeweils zu Laufschaufelreihen zusammengefaßten, an einer Turbinenwelle (8) angeordneten Laufschaufeln (12) und mit einer Anzahl von jeweils zu Leitschaufelreihen zusammengefaßten, mit einem Turbinengehäuse (6) verbundenen Leitschaufeln (14), wobei die die in Strömungsrichtung des Arbeitsmediums (M) gesehen erste Leitschaufelreihe bildenden Leitschaufeln (14) jeweils einen integrierten Kühlmittelkanal aufweisen, dessen Einlaß (32) am freien Ende (34) der jeweiligen Leitschaufel (14) angeordnet ist, und der sich innerhalb des jeweiligen Schaufelkörpers in einen ersten und einen zweiten Teilkanal verzweigt,
**dadurch gekennzeichnet, dass**
der erste Teilkanal für eine geschlossene Kühlung des Schaufelprofils der jeweiligen Leitschaufel (14) ausgestaltet ist und der diesen Teilkanal durchströmende erste Teilstrom unter vertretbaren Druckverlust zur Kühlung der Leitschaufel vorgesehen ist und wobei der den zweiten Teilkanal durchströmende Teilstrom diese Leitschaufel im wesentlichen verlustfrei durchströmt.

2. Gasturbine (1) nach Anspruch 1, bei der die zweiten Teilkanäle der jeweiligen Leitschaufeln (14) ausgangsseitig mit einem Kühlkanalsystem eines mit dem Turbinengehäuse (6) verbundenen Führungsrings (21) verbunden sind, an das seinerseits ausgangsseitig für jede der die in Strömungsrichtung des Arbeitsmediums (M) gesehen zweite Leitschaufelreihe bildende Leitschaufel (14) jeweils ein in diese integrierter Kühlmittelkanal angeschlossen ist.

3. Gasturbine (1) nach einem der Ansprüche 1 bis 2, bei der dem in die jeweiligen Leitschaufeln (14) integrierten Kühlmittelkanal kühlmittelseitig ein Kühlmittelverdichter (50) vorgeschaltet ist.

4. Gasturbine (1) nach Anspruch 3, deren Kühlmittelverdichter (50) derart bemessen ist, daß er bei auslegungsgemäßen Betriebsbedingungen eine Druckerhöhung im Kühlmittel (K) derart erzeugt, daß das Kühlmittel (K) bei Rückführung in einen die Brennkammer (4) der Gasturbine (1) umgebenden Strömungsraum (42) annähernd den dort herrschenden Druck aufweist.

## Claims

1. Gas turbine (1) having a number of moving blades (12) in each case combined to form moving-blade rows and arranged on a turbine shaft (8) and having a number of guide blades (14) in each case combined to form guide-blade rows and connected to a turbine casing (6), the guide blades (14) which form the first guide-blade row as viewed in the direction of flow of the working medium (M) each having an integrated cooling-medium passage, the inlet (32) of which is arranged at the free end (34) of the respective guide blade (14) and which branches into a first and a second partial-flow passage inside the respective blade body, **characterized in that** the first partial-flow passage is designed for closed cooling of the blade profile of the respective guide blade (14), and the first partial flow flowing through this partial-flow passage is provided for cooling the guide blade with a tolerable pressure loss, and the partial flow which flows through the second partial-flow passage flowing through this guide blade essentially free of losses.

2. Gas turbine (1) according to Claim 1, in which the second partial-flow passages of the respective guide blades (14) are connected on the outlet side to a cooling-medium system of a guide ring (21) connected to the turbine casing (6), and connected in turn to this cooling-medium system, on the outlet side, for each of the guide blades (14) forming the second guide-blade row as viewed in the direction of flow of the working medium (M), is a respective cooling-medium passage integrated in the said guide blades (14).

3. Gas turbine (1) according to either of Cslaims 1 and 2, in which a cooling-medium compressor (50) is connected on the cooling-medium side upstream of the cooling-medium passage integrated in the respective guide blades (14).

4. Gas turbine (1) according to Claim 3, the cooling-medium compressor (50) of which is dimensioned in such a way that, under operating conditions for which it is designed, it produces a pressure increase in the cooling medium (K) in such a way that the cooling medium (K), when being fed back into a flow space (42) surrounding the combustion chamber (4) of the gas turbine (1), approximately has the pressure prevailing there.

## Revendications

1. Turbine (1) à gaz comprenant un certain nombre d'aubes (12) mobiles rassemblées en respectivement des rangées d'aubes mobiles et montées sur un arbre (8) de turbine, et un certain nombre d'aubes (14) directrices rassemblées en respectivement des rangées d'aubes directrices et reliées à une carcasse (10) de turbine, les aubes (14) directrices formant la première rangée d'aubes directrices vue dans le sens d'écoulement du fluide (M) de travail ayant respectivement un canal intégré pour du fluide de refroidissement dont l'entrée (32) est disposée à l'extrémité (34) libre de l'aube (14) directrice respective et qui se ramifie à l'intérieur du corps de l'aube en un premier et en un deuxième sous-canal,
**caractérisée en ce que**
le premier sous-canal est conformé pour un refroidissement fermé du profil de l'aube (14) directrice respective et le premier sous-courant passant dans ce premier sous-canal est prévu pour le refroidissement de l'aube directrice avec une perte de pression acceptable, et le sous-courant passant dans le deuxième sous-canal passe dans cette aube directrice sensiblement sans perte.

2. Turbine (1) à gaz suivant la revendication 1, dans laquelle les deuxièmes sous-canaux des aubes (14) directrices respectives communiquent du côté de la sortie avec un système de canal de refroidissement d'un anneau (21) de guidage relié à la carcasse (6) de la turbine auquel est raccordé pour sa part, du côté de la sortie, pour chacune des aubes (14) directrices formant la deuxième rangée d'aubes directrices vue dans le sens d'écoulement du fluide (M) de travail, respectivement un canal pour du fluide de refroidissement intégré dans cette aube.

3. Turbine (1) à gaz suivant la revendication 1 à 2, dans laquelle il est monté, en aval du canal pour du fluide de refroidissement intégré dans les aubes (14) directrices respectives, du côté du fluide de refroidissement, un compresseur (50) de fluide de refroidissement.

4. Turbine (1) suivant la revendication 3, dont le compresseur (50) pour du fluide de refroidissement est tel qu'il produit, dans des conditions de fonctionnement méformes à la conception, une élévation de la pression du flux (K) de refroidissement telle que le fluide (K) de refroidissement a, lors du retour dans l'un des espaces (42) d'écoulement entourant la chambre de combustion (4) de la turbine (1) à gaz, à peu près la pression qui y règne.
